(19) Europäisches Patentamt
European Patent Office
Office européen des brevets

(11) **EP 4 443 033 A1**

(12) **EUROPÄISCHE PATENTANMELDUNG**

(43) Veröffentlichungstag:
**09.10.2024   Patentblatt 2024/41**

(21) Anmeldenummer: **24165561.2**

(22) Anmeldetag: **22.03.2024**

(51) Internationale Patentklassifikation (IPC):
**F16K 1/04** (2006.01)   **F16K 31/04** (2006.01)
**F16K 37/00** (2006.01)   **F16K 31/50** (2006.01)
**F16K 31/06** (2006.01)   **G01D 5/20** (2006.01)

(52) Gemeinsame Patentklassifikation (CPC):
**F16K 37/0041; F16K 1/04; F16K 31/04;
F16K 31/50;** G01D 5/202

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **06.04.2023   DE 102023203231**

(71) Anmelder: **VOLKSWAGEN AG
38440 Wolfsburg (DE)**

(72) Erfinder: **Kruse, Tom
37581 Bad Gandersheim (DE)**

(54) **POSITIONSSENSOR FÜR EIN VENTIL UND EIN VERFAHREN ZUR POSITIONSMESSUNG EINES VENTILS**

(57)    Um die Position eines Ventils zu bestimmen, wird ein Ventilkörper (110) zumindest teilweise innerhalb einer Spule oder Leiterschleife (150) bewegt, oder ein Ventilkörper (110), der mit einer Spule oder Leiterschleife (155) verbunden ist, wird innerhalb des Ventils bewegt; die elektrischen Eigenschaften der Spule oder Leiterschleife (150, 155) werden gemessen; und die Position des Ventilkörpers (110) innerhalb des Ventils (110) wird aus den gemessenen elektrischen Eigenschaften bestimmt.

Fig. 1

EP 4 443 033 A1

**Beschreibung**

Die Erfindung betrifft einen Positionssensor für ein Ventil und ein Verfahren zur Positionsmessung eines Ventils.

Das beschriebene Ventil besteht insbesondere aus einem beweglichen Ventilkörper mit Ventilschaft und Dichtkörper, der sich in einem Ventilgehäuse bewegt. Vorzugsweise wird hierzu der Ventilkörper mit Hilfe eines Motors in Drehung versetzt, die mit Hilfe eines Gewindes in eine lineare, das Ventil öffnende oder schließende, Bewegung umgewandelt wird.

Eine solche Anordnung ist zum Beispiel aus der CN112555427 A bekannt. Hier wird das Ventil mit einem Positionssensor zwischen dem oberen Ende des Ventilschafts und dem oberen Ende des Ventilkörpers ausgestattet, der die lineare Verschiebung des Ventilschafts genau messen kann. Ein Steuergerät sendet ein Impulssignal an eine Spule, um die Drehung von Rotor-Komponenten zu steuern, und wandelt dann die Drehbewegung des Rotors in eine lineare Verschiebung der Ventilstange durch ein Gewindeübertragungspaar um. Die lineare Verschiebung der Getriebestange bewirkt, dass sich ein Metalldraht verformt und sich sein entsprechender Widerstandswert ändert. In Signalgeber wird die Änderung des Widerstandswertes des Metalldrahtes in die Positionsöffnung der Ventilstange umgewandelt und an das Steuergerät zurückgeführt, wobei die Einstellung der Positionsöffnung im geschlossenen Regelkreis über die eingestellte Öffnung erfolgt, was die Regelgenauigkeit verbessert.

Aus der US 2022/0154851 A1 ist ein elektronisches Expansionsventil für ein Kühlsystem bekannt. Das elektrische Expansionsventil umfasst: einen Ventilsitz, der mit einem Einlass, einem Auslass und einem Verbindungskanal, der mit dem Einlass und dem Auslass in Verbindung steht, versehen ist; einen Aktuator, der beweglich in dem Ventilsitz angebracht ist, wobei der Aktuator mit einer ersten Position, um den Verbindungskanal zu blockieren, und einer zweiten Position, um den Verbindungskanal zu vermeiden, versehen ist, und einen Antriebsmechanismus, der mit dem Aktuator verbunden ist, um den Aktuator zwischen der ersten Position und der zweiten Position zu bewegen.

Zum Beispiel aus der DE 4341102 A1 ist bekannt, die Ventilstange mit einem Magneten zu versehen, und dessen Position mit Hilfe eines Hallelementes zu bestimmen.

Der Erfindung liegt die Aufgabe zugrunde, eine präzise und kostengünstige Positionsbestimmung eines Ventils zu ermöglichen. Insbesondere soll diese Positionsbestimmung berührungslos erfolgen.

Diese Aufgabe wird durch die Gegenstände der unabhängigen Ansprüche 1, 2, 7 und 8 gelöst. Besondere Ausführungsformen werden in den abhängigen Ansprüchen 3 bis 6 und 9 und 10 definiert.

Insbesondere liegt der Erfindung folgende Idee zugrunde: Um die Spindel eines Ventilkörpers wird umgreifend eine Induktivität, also eine Spule oder Leiterschleife konstruiert. Der Aktuator des Ventils verfährt innerhalb der Spule oder Leiterschleife und verändert so ihre elektrischen Eigenschaften. Insbesondere verändert das Einführen eines ferromagnetischen Materials in eine Induktivität bzw. deren Luftspalt den Wert dieser Induktivität.

Die sich verändernde Induktivität wird vorzugsweise über eine Elektronik im Ventil erfasst und daraus die Position des Aktuators ermittelt. Besonders vorzugsweise kann die Induktivität des Stators im das Ventil bewegenden Motor genutzt werden oder die zu messende Spule oder Leiterschleife in den Stator des Motors integriert werden.

Im Speziellen wird die gestellte Aufgabe gelöst durch Bereitstellen eines Positionssensors, umfassend einen beweglichen Ventilkörper und eine feststehende, den Ventilkörper zumindest teilweise umschließende, Spule oder Leiterschleife. Weiterhin bereitgestellt werden Mittel zum Ausmessen der elektrischen Eigenschaften, insbesondere der Induktivität der Spule oder Leiterschleife, wobei die elektrischen Eigenschaften der Spule oder Leiterschleife durch Bewegung des Ventilkörpers innerhalb der Spule oder Leiterschleife verändert werden.

Alternativ kann die Induktivität, deren Eigenschaften gemessen werden, durch eine Spule oder Leiterschleife am bzw. im Ventilkörper ausgeführt sein. In diesem Fall können die elektrischen Eigenschaften der Spule oder Leiterschleife zum Beispiel über Schleifkontakte ausgemessen werden.

Bevorzugt sind die gemessenen elektrischen Eigenschaften der Spule oder Leiterschleife ein Induktivitätswert und/oder eine Impedanz, das heißt ein komplexer Widerstand der Spule oder Leiterschleife. Besonders bevorzugt können diese Eigenschaften durch das Anlegen einer Wechselspannung bzw. eines Wechselstroms an die Spule oder Leiterschleife und das Messen eines frequenzabhängigen Widerstands, das Messen einer Phase zwischen Strom durch und Spannung über die Spule oder Leiterschleife, das Messen einer Resonanzfrequenz eines Schwingkreises bestehend aus der Spule und einem Kondensator, oder durch das Messen des zeitlichen Verlaufs einer Spannung über die Spule oder Leiterschleife nach Anlegen eines Stroms bzw. des zeitlichen Verlaufs des Stroms durch die Spule oder Leiterschleife bei Anlegen einer Spannung gemessen werden.

Bevorzugt wird der Ventilkörper mit Hilfe eines Motors bewegt, besonders bevorzugt ist der Motor eingerichtet, den Ventilkörper in Rotation um eine Achse zu versetzen, und das Ventil umfasst weiterhin eine Gewindeverbindung, die eingerichtet ist, die Rotation des Ventilkörpers in eine lineare Bewegung längs dieser Achse umzusetzen.

Besonders bevorzugt besteht hierbei der Ventilkörper aus einem spindelförmigen Ventilschaft und einem kegelförmigen Dichtkörper.

Bevorzugt ist der Ventilkörper des Ventils mit dem Rotor des Motors verbunden oder stellt zumindest einen Teil dieses Rotors dar.

Bevorzugt ist die Spule oder Leiterschleife, deren elektrische Eigenschaften gemessen werden, mit dem Stator des Motors verbunden oder stellt zumindest einen Teil von diesem dar.

Bevorzugt ist das Ventil geeignet, als Expansionsventil, Mehrwegeventil oder Absperrventil in einem Kältemittelkreislauf, besonders bevorzugt im Kältemittelkreislauf eines Fahrzeugs, zu wirken.

Ausführungsbeispiele der Erfindung werden anhand von Zeichnungen erläutert.

Es zeigen:

Fig. 1     eine schematische Darstellung eines Ventils mit erfindungsgemäßer Positionserkennung und

Fig. 2     ein Ablaufdiagramm eines erfindungsgemäßen Verfahrens zur Positionserkennung eines Ventils.

Fig. 3a, 3b     eine schematische Darstellung der physikalischen Grundlagen der erfindungsgemäßen Positionserkennung.

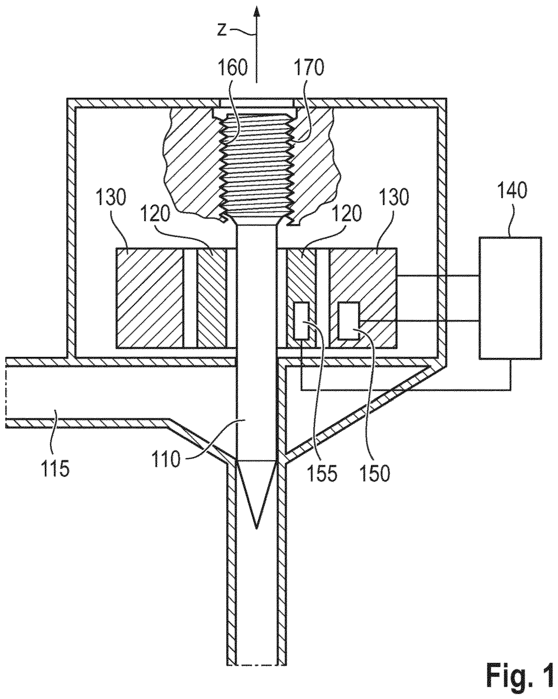

In Fig. 1 wird ein Ventil 100 dargestellt, das verschiedene Ausführungsformen der vorliegenden Erfindung beschreibt. Dieses Ventil besteht aus einem beweglichen Ventilkörper 110, der entlang einer Richtung z beweglich ist, um eine Leitung 115 abzusperren. Insbesondere wird hierzu der Ventilkörper 110 mit Hilfe eines Motors bestehend aus Rotor 120 und Stator 130 in eine Rotation um die z-Achse versetzt, die mit Hilfe einer Gewindeverbindung 160, 170 bestehend aus einem mit dem Ventilkörper verbundenen Gewinde 160 und einem feststehenden Gewinde 170, in eine lineare Bewegung entlang der z-Achse umgesetzt werden kann.

Ebenfalls gezeigt wird ein erfindungsgemäßer Positionssensor, bestehend aus einer Spule oder Leiterschleife 150, 155, die entweder als eine den Ventilkörper 110 zumindest teilweise umschließende Spule oder Leiterschleife 150 oder als eine mit dem Ventilkörper 110 verbundene Spule oder Leiterschleife 155, ausgeführt ist. Insbesondere kann diese Spule oder Leiterschleife den Stator 130 oder den Rotor 120 des Motors darstellen bzw. in diesen integriert sein. Durch die Bewegung des Ventilschafts 110 innerhalb der Spule oder Leiterschleife 150 bzw. der Spule oder Leiterschleife 155 innerhalb des Ventils, insbesondere innerhalb des Stators 130, wird die elektromagnetische Umgebung und damit die elektrischen Eigenschaften, insbesondere die Induktivität, der Spule oder Leiterschleife verändert.

Des Weiteren gezeigt werden Mittel 140, zum Beispiel eine Messelektronik, um die durch die Bewegung des Ventilkörpers 110 veränderten elektrischen Eigenschaften, insbesondere die Induktivität, der Spule oder Leiterschleife 150, 155 auszulesen. Aus den Veränderungen dieser Eigenschaften können dann die Messelektronik oder entsprechende andere Mittel 140 die Position des Ventilkörpers 110 im Ventil 100 bestimmen.

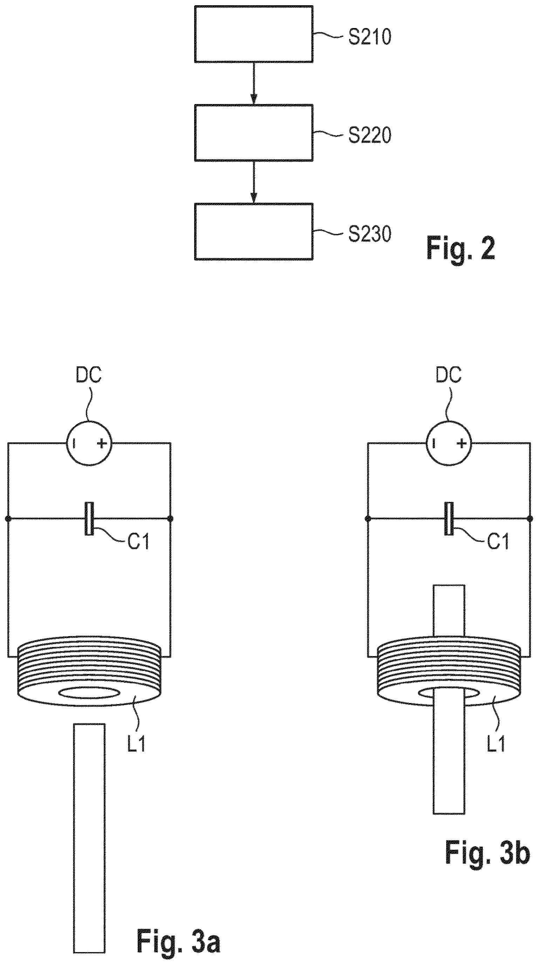

Figur 2 zeigt einen Ablaufplan eines erfindungsgemäßen Verfahrens: In einem ersten Schritt S210 wird ein Ventilkörper 110 zumindest teilweise innerhalb einer Spule oder Leiterschleife 150 oder mit einer Spule oder Leiterschleife 155 verbunden bewegt. Im nachfolgenden, zweiten Schritt S220 werden dann die elektrischen Eigenschaften, insbesondere die Induktivität dieser Spule oder Leiterschleife 150, 155 gemessen und schließlich in einem weiteren, dritten Schritt S230 aus den so gemessenen elektrischen Eigenschaften eine Position des Ventilkörpers 110 bestimmt.

Figuren 3a und 3b zeigt eine schematische Darstellung der physikalischen Grundlagen der erfindungsgemäßen Positionsmessung.

Figur 3a zeigt einen LC-Schwingkreis bestehend aus einer Spule L1 (z.B. dem Rotor 120 oder der Messinduktivität 150, 155) und einem Kondensator C1. Die Resonanzfrequenz dieses

$$(1) f = 1/(2\pi\sqrt{LC}),$$

Schwingkreises ist gegeben durch , wobei C die Kapazität des Kondensators C1 und L die Induktivität der Spule L1 ist. Die Induktivität L wird in diesem Beispiel berechnet durch

$$(2)\ L = \mu_0\mu_r N^2 A/l.$$

.

Hierbei ist N die Windungszahl, A die Querschnittsfläche l die Länge der Spule L1; $\mu_0$ ist die Vakuumpermeabilität $4\pi\cdot10^{-7}$ N/A$^2$ und $\mu_R$ die relative Permeabilität des eingeschlossenen Volumens. Für nicht-ferromagnetische Materialien oder Luft liegt $\mu_R$ in der Größenordnung von eins.

Fig. 3b zeigt, wie ein ferromagnetisches Material, z.B. der Rotor 120 des Ventilkörpers in die Spule L1 eingeschoben wurde. Dies erhöht den Wert von $\mu_R$ um einen Faktor zwischen einigen hundert und 10 000 und senkt damit die Resonanzfrequenz des Schwingkreises nach Formel (1) um einen Faktor 10 bis 100. Diese starke Änderung der Resonanzfrequenz erlaubt eine präzise Bestimmung der Position des ferromagnetischen Materials innerhalb der Spule.

**Bezugszeichenliste**

| | |
|---|---|
| 100 | Ventil |
| 110 | Ventilkörper |
| 115 | Leitung |

| 120 | Rotor |
|---|---|
| 130 | Stator |
| 140 | Mittel zum Ausmessen |
| 150, 155 | Spule oder Leiterschleife |
| 160 | Gewinde am Ventilkörper |
| 170 | feststehendes Gewinde |
| z | Bewegungsachse |
| 200 | Ablaufplan |
| S210 | erster Schritt (Bewegen des Ventilkörpers) |
| S220 | zweiter Schritt (Bestimmen der Induktivität) |
| S230 | dritter Schritt (Bestimmen der Position des Ventilkörpers) |
| L1 | Spule |
| C1 | Kondensator |
| DC | Spannungsquelle |

**Patentansprüche**

1. Positionssensor für ein Ventil (100) beinhaltend:

   einen beweglichen Ventilkörper (110); und
   eine, den Ventilkörper (110) zumindest teilweise umschließende oder mit diesem verbundene, Spule oder Leiterschleife (150, 155), **gekennzeichnet durch** Mittel (140) zum Ausmessen der elektrischen Eigenschaften der Spule oder Leiterschleife (150), wobei die elektrischen Eigenschaften der Spule oder Leiterschleife (150, 155) durch Bewegung des Ventilkörpers (110) innerhalb der Spule oder Leiterschleife (150) oder durch Bewegung der Spule oder Leiterschleife (155) innerhalb des Ventils (100) verändert werden.

2. Ventil (100), umfassend einen Positionssensor nach Anspruch 1.

3. Ventil (100) nach Anspruch 2, wobei der Ventilkörper (110) mit Hilfe eines Motors bewegt wird und mit dem Rotor (120) des Motors verbunden ist.

4. Ventil (100) nach Anspruch 3, wobei die Spule oder Leiterschleife (150) den Ventilkörper (110) zumindest teilweise umschließt und mit dem Stator (130) des Motors verbunden ist oder diesen darstellt.

5. Ventil (100) nach einem der Ansprüche 2 bis 4, weiterhin umfassend ein mit dem Ventilkörper (110) verbundenes Gewinde (160), das mit einem feststehenden Gewinde (170) zusammenwirkt, um den Ventilkörper (110) durch Rotation um seine Achse (z) entlang der Richtung dieser Achse (z) zu bewegen.

6. Ventil (100) nach einem der Ansprüche 2 bis 5, das geeignet ist, als Expansionsventil, Mehrwegeventil oder Absperrventil in einem Kältekreislauf zu wirken.

7. Kältemaschine mit Expansionsventil und/oder Mehrwegeventil und/oder Absperrventil nach Anspruch 6.

8. Verfahren zur Positionsmessung eines Ventils (100), beinhaltend:

   Bewegen (S210) eines Ventilkörpers (110) zumindest teilweise innerhalb einer Spule oder Leiterschleife (150) oder Bewegen eines Ventilkörpers (110), der mit einer Spule oder Leiterschleife (155) verbunden ist;
   Messen (S220) der elektrischen Eigenschaften der Spule oder Leiterschleife (150, 155);
   **gekennzeichnet durch** Bestimmen (S230) der Position des Ventilkörpers (110) innerhalb des Ventils (110) aus den gemessenen elektrischen Eigenschaften.

9. Verfahren nach Anspruch 8, wobei das Bewegen (S210) des Ventilkörpers (110) mit Hilfe eines Motors geschieht, und wobei der Ventilkörper (110) zumindest teilweise innerhalb der Spule oder Leiterschleife (150) mit einem Rotor (120) des Motors verbunden ist, und/oder wobei die Spule oder Leiterschleife (150) den Stator (130) des Motors darstellt oder in diesen integriert ist.

10. Verfahren nach Anspruch 8 oder 9, wobei das Messen (S220) der elektrischen Eigenschaften der Spule oder Leiterschleife (150, 155) das Messen eines Induktivitätswertes, einer Impedanz oder eines frequenzabhängigen Widerstands umfasst.

Fig. 1

Fig. 2

Fig. 3a

Fig. 3b

Europäisches Patentamt
European Patent Office
Office européen des brevets

# EUROPÄISCHER RECHERCHENBERICHT

**Nummer der Anmeldung**

EP 24 16 5561

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2010 078002 A (AISAN IND) 8. April 2010 (2010-04-08) | 1-5,8-10 | INV. F16K1/04 |
| A | * Absatz [0003] - Absatz [0005] * * Absatz [0038]; Abbildungen 1, 2 * | 6,7 | F16K31/04 F16K37/00 |
| X | & JP 2002 250468 A (DENSO CORP) 6. September 2002 (2002-09-06) | 1,2,8,10 | F16K31/50 F16K31/06 |
| A | * Absatz [0006]; Abbildungen 1, 2 * | 3-7,9 | G01D5/20 |
| | ----- | | |
| X | US 5 394 082 A (SCHIESSLE EDMUND [DE] ET AL) 28. Februar 1995 (1995-02-28) * Spalte 2, Zeile 9 - Zeile 15; Abbildung 1 * | 1,2,8-10 | |
| | ----- | | |
| X | US 2004/011979 A1 (SEO KAZUTAKA [JP] ET AL) 22. Januar 2004 (2004-01-22) | 1,2,8,10 | |
| A | * Absatz [0002] - Absatz [0012]; Abbildungen 1-3 * * Absatz [0061] - Absatz [0065]; Abbildungen 6, 7 * | 3-7,9 | |
| | ----- | | |
| X | US 6 566 862 B1 (GOTO ATSUTOSHI [JP] ET AL) 20. Mai 2003 (2003-05-20) | 1,8,10 | **RECHERCHIERTE SACHGEBIETE (IPC)** |
| A | * Spalte 33, Zeile 49 - Spalte 35, Zeile 59; Abbildungen 17A, 17B * | 2-7,9 | F16K G01D |
| | ----- | | |
| X | DE 101 18 583 A1 (AWECO APPLIANCE SYS GMBH & CO [DE]) 17. Oktober 2002 (2002-10-17) * Absatz [0001] - Absatz [0002] * * Absatz [0016] - Absatz [0029]; Abbildungen * | 1,2,6-10 | |
| | ----- | | |
| A | US 5 316 263 A (MINO YOSHIHITO [JP]) 31. Mai 1994 (1994-05-31) * Spalte 1, Zeile 5 - Zeile 11; Abbildung 5 * | 1,2,6,7 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 6. August 2024 | Silea, Cristian |

## ANHANG ZUM EUROPÄISCHEN RECHERCHENBERICHT
## ÜBER DIE EUROPÄISCHE PATENTANMELDUNG NR.

EP 24 16 5561

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-08-2024

| Im Recherchenbericht angeführtes Patentdokument | Datum der Veröffentlichung | Mitglied(er) der Patentfamilie | Datum der Veröffentlichung |
|---|---|---|---|
| JP 2010078002 A | 08-04-2010 | KEINE | |
| US 5394082 A | 28-02-1995 | DE 4238861 A1 | 05-08-1993 |
| | | US 5394082 A | 28-02-1995 |
| US 2004011979 A1 | 22-01-2004 | JP WO2003021183 A1 | 16-12-2004 |
| | | US 2004011979 A1 | 22-01-2004 |
| | | WO 03021183 A1 | 13-03-2003 |
| US 6566862 B1 | 20-05-2003 | DE 60007202 T2 | 04-11-2004 |
| | | EP 1037017 A1 | 20-09-2000 |
| | | US 6566862 B1 | 20-05-2003 |
| | | US 2003102862 A1 | 05-06-2003 |
| DE 10118583 A1 | 17-10-2002 | KEINE | |
| US 5316263 A | 31-05-1994 | GB 2265228 A | 22-09-1993 |
| | | JP H05256544 A | 05-10-1993 |
| | | US 5316263 A | 31-05-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 112555427 A
- US 20220154851 A1

- DE 4341102 A1